# EUROPEAN PATENT APPLICATION

(11) **EP 0 793 084 A2**
(43) Date of publication of application: **03.09.1997**
(21) Application number: 97102801.4
(22) Date of filing: 20.02.1997
(51) Int. Cl.: G01M 15/00

(54) **A communication control apparatus for controlling comunication between a group of electronic units in vehicles**

(30) Priority: 28.02.1996 JP 41544/96
(71) Applicant: TOYOTA JIDOSHA KABUSHIKI KAISHA, Aichi-ken 471 (JP)
(72) Inventor: Leung, Sherman, Toyota-shi, Aichi-ken 471 (JP)
(74) Representative: KUHNEN, WACKER & PARTNER

(57) **Abstract**

A communication control apparatus (10) for controlling communication between a group of electronic control units (11, 12, 13) that are provided in a vehicle and a diagnostic apparatus (20), which diagnoses each electronic control unit (11, 12, 13). Each of the control units (11, 12, 13) stores diagnostic data used for diagnosis and is connected to the other control units (11, 12, 13) so as to construct a communication network. The diagnostic apparatus (20) is connected to the network to communicate with and read out the diagnostic data stored in each of said control units (11, 12, 13). The diagnostic apparatus (20) commences communication with the control units (11, 12, 13) by transmitting an initialization signal to the network. A first control unit (11) determines whether the initialization signal has been transmitted from the diagnostic apparatus (20) when communication takes place between the first control unit (11) and the other control units (12, 13). The first control unit (11) further transmits an interrupting signal to the network to stop the transmission of the initialization signal when it is determined that the initialization signal has been transmitted.

## Description

### TECHNICAL FIELD OF WHICH THE INVENTION BELONGS

The present invention relates to a communication control apparatus for a vehicle provided with electronic control units that are connected to one another by a communication network. More particularly, the present invention pertains to a vehicle communication control apparatus that controls communication between a plurality of electronic control units, which are provided in the vehicle, and a diagnostic apparatus, which reads the diagnostic data stored in the electronic control units.

### RELATED BACKGROUND ART

Electronic control has become widely used in vehicles such as automobiles. There are various electronic control units (hereafter referred to as ECU) that are used in automobiles. For example, there is an ECU that is used for controlling the fuel injection, an ECU used for controlling the transmission, and an ECU used for controlling the anti-lock brake system. Each ECU sends a command signal to the corresponding device and controls the device in an optimum manner. A self-diagnosing function is provided for each ECU. When an abnormality is detected while controlling the corresponding device, diagnostic data indicating such abnormality is stored in the ECU.

Accordingly, when there is a fault in the automobile, the fault may be identified by connecting an external vehicle diagnostic apparatus to a communication port provided in each ECU. The diagnostic apparatus reads out the diagnostic data stored in each ECU. Analysis of the diagnostic data may locate the cause of the fault. Furthermore, the diagnostic apparatus is used to determine whether each ECU is functioning normally when the assembled automobile leaves the factory.

However, the number of ECUs that are used in automobiles is increasing in accordance with the rapid progress in electronic control. This has complicated the diagnosis of the ECUs.

To simplify the diagnosis, the ECUs may be connected to one another with a data bus to form a communication network. This enables intercommunication between the ECUs. Thus, the data stored in each ECU may be used by a different ECU. This allows further progress in vehicle control technology.

Japanese Unexamined Patent Publication No. 2-73130 describes a communication network that interconnects a plurality of ECUs so that an external diagnostic apparatus may read the diagnostic data stored in each ECU. A communication connector provided in the diagnostic apparatus is connected to a communication port provided in the network. This facilitates the reading of the diagnostic data.

There is a standard related to vehicle diagnostic systems, which has been specified by the International Standardization Organization (ISO). Accordingly, it is preferable that vehicle diagnostic systems be constructed in accordance with the associated ISO standard. However, the construction of a vehicle diagnostic system in accordance with the ISO standards raises a problem.

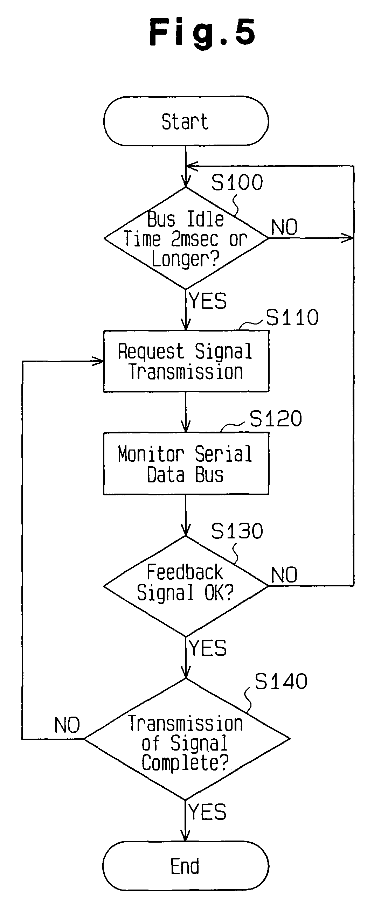

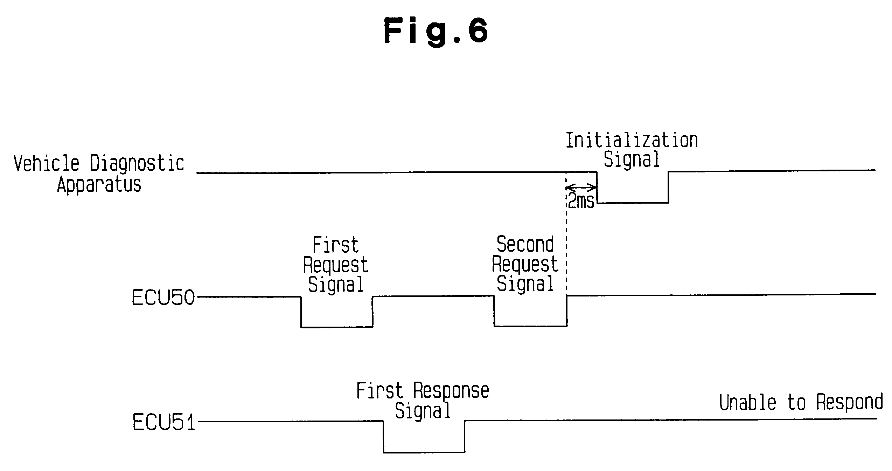

This problem will be described with reference to Figs. 5 and 6. A flowchart of a communication control program that is executed by a prior art ECU 50 is shown in Fig. 5. A time chart illustrating the communication timing of a diagnostic apparatus, the ECU 50, and an ECU 51 is shown in Fig. 6. In the flowchart of Fig. 5, "S" refers to step.

The ISO standards require that the diagnostic apparatus wait for at least two milliseconds (msec) of bus idle time to elapse before transmitting an initialization signal. It is also required in the ISO standard that the ECU that is functioning as a master controller wait for at least two msec of bus idle time to elapse before transmitting signals.

In the flowchart of Fig. 5, it is presumed that signals are being exchanged between the ECU 50 and the ECU 51. A serial data bus is constantly monitored by the ECU 50. The ECU 50 stands by until confirming that at least two msec have elapsed before transmitting a signal to the ECU 51 (S100: NO). When the ECU 50 determines that at least two msec of bus idle time have elapsed (S100: YES), the ECU 50 transmits a first request signal to the ECU 51 through the data bus to commence communication (S110).

The ECU 50 then monitors the data bus (S120) and judges whether a feedback signal (not shown) sent through the data bus corresponds with the first request signal (S130). When it is judged that the feedback signal differs from the first request signal (S130: NO), the ECU 50 returns to S100.

When the ECU 50 judges that the first request signal corresponds with the feedback signal (S130: YES), the ECU 50 determines that the feedback signal was sent from the intended source, which is the ECU 51, and proceeds to step 140. If the ECU 50 determines that transmission of the first request signal has not yet been completed (S140: NO), the ECU 50 returns to S110 and repeats the transmission of the first request signal. When the ECU 50 determines that the transmission of the first request signal has been completed (S140: YES), the ECU 50 ends communication.

In response to the first request signal from the ECU 51, the ECU 51 then transmits a corresponding first response signal to the ECU 50 through the data bus.

The diagnostic apparatus transmits an initialization signal to the data bus after waiting for at least two msec of the bus idle time to elapse. However, an interval of 20 to 50msec of bus idle time often appears in the data bus. Accordingly, this may cause the diagnostic apparatus to transmit an initialization signal to the data bus after two msec of bus idle time elapses after receiving a second request signal.

As a result, in S130 of the flowchart shown in Fig. 5, the ECU 50 may receive the initialization signal and consider it to be the feedback signal. In this case, the ECU 50 judges that the feedback signal differs from the second request signal and returns to S100 to wait until two msec of bus idle time elapses. This causes the diagnostic apparatus to function as a master controller, which controls the data bus, and the ECU 50 to function as a slave controller, which is controlled by the diagnostic apparatus. Since the data bus and the ECUs 50, 51 are initialized by the initialization signal, the transmission of the second response signal from the ECU 51 in response to the second request signal is stopped.

Thus, when an initialization signal is sent from the diagnostic apparatus, this interrupts the communication between the ECUs 50, 51 and initializes the data bus, and the ECUs 50, 51. This prevents the ECUs from completing communication and degrades communication efficiency.

### DISCLOSURE OF THE INVENTION

Accordingly, it is an objective of the present invention to provide a communication control apparatus that prevents a diagnostic apparatus from interrupting communication carried out between a plurality of electronic control units through a communication network.

To achieve the above objective, the present invention provides a communication control apparatus for controlling communication between a plurality of electronic control units that are provided in a vehicle and a diagnostic apparatus, which diagnoses each electronic control unit. Each of the control units stores diagnostic data used for diagnosis and is connected to the other control units so as to construct a communication network. The diagnostic apparatus is connected to the network to communicate with and read out the diagnostic data stored in each of the control units. The communication with the control units is commenced by transmission of an initialization signal to the network from the diagnostic apparatus. The plurality of electronic control units includes at least one first control unit. The first control unit includes a determining means for determining whether the initialization signal has been transmitted from the diagnostic apparatus when communication is taking place between the first control unit and other control units, and a transmitting means for transmitting an interrupting signal to the network to stop the transmission of the initialization signal when the determining means determines that the initialization signal has been transmitted.

### BRIEF DESCRIPTION OF THE DRAWINGS

The features of the present invention that are believed to be novel are set forth with particularity in the appended claims. The invention, together with objects and advantages thereof, may best be understood by reference to the following description of the presently preferred embodiments together with the accompanying drawings in which:
Fig. 1 is a diagrammatic drawing showing the structure of a communication control apparatus according to the present invention;
Fig. 2 is a block diagram diagrammatically showing the structure of the first ECU shown in Fig. 1;
Fig. 3 is a flowchart showing a communication control program executed by the first ECU;
Fig. 4 is a time chart showing the communication timing of the diagnostic apparatus, the first ECU, and the second ECU;
Fig. 5 is a flowchart showing a communication control program executed by a prior art communication control apparatus; and
Fig. 6 is a time chart showing the communication timing of the prior art communication control apparatus.

### DESCRIPTION OF SPECIAL EMBODIMENTS

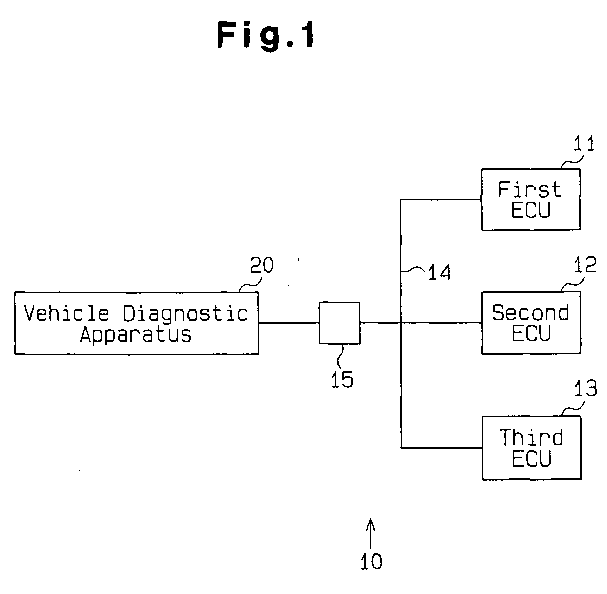

An embodiment of a vehicle communication control apparatus according to the present invention will hereafter be described with reference to Figs. 1 through 4.

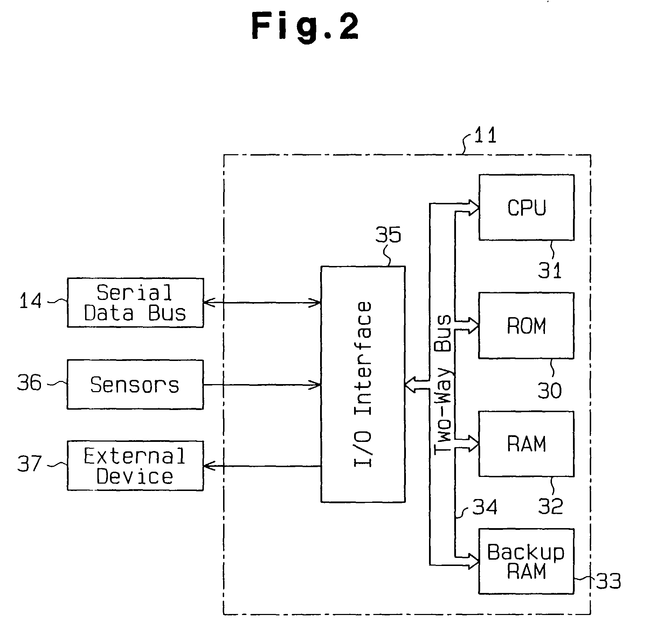

The structure of a communication control apparatus will first be described with reference to Figs. 1 and 2. Fig. 1 is a diagrammatic drawing showing the structure of a communication control apparatus 10. Fig. 2 is a block diagram diagrammatically showing the structure of a first electronic control unit (ECU) 11.

As shown in Fig. 1, the first ECU 11, a second ECU 12, and a third ECU 13 are connected to each other by a serial data bus 14. The ECUs 11, 12, 13 and the data bus 14 construct a local area network (LAN). A standard connector 15 is provided on the data bus 14. An external vehicle diagnostic apparatus 20 is connected to the standard connector 15.

An external device 37 (Fig. 2), such as an injector or an ignitor, is connected to each ECU 11, 12, 13. The ECUs 11, 12, 13 control the associated device 37 in an optimal manner. Each of the ECUs 11, 12, 13 are provided with a self-diagnosis function. More specifically, when each ECU 11, 12, 13 controls the associated external device 37, the ECU 11, 12, 13 detects the operating state of the device 37 and stores the detected results as diagnostic data.

During communication between the ECUs 11, 12, 13, the first ECU 11 functions as a master controller. If the ECUs 11, 12, 13 and the data bus 14 are initialized by the external diagnostic apparatus 20 connected to the connector 15, the diagnostic apparatus 20 functions as the master controller while the first ECU 11 functions as a slave controller. The second and third ECUs 12, 13 always function as slave controllers.

The diagnostic apparatus 20 reads out the diagnostic data stored in the ECUs 11, 12, 13 when connected to the data bus 14 by means of the connector 15 and analyzes the ECUs 11, 12, 13 to locate faults. The diagnostic apparatus 20 transmits an initialization signal to the data bus 14 to initialize the ECUs 11, 12, 13 before reading out the diagnostic data.

The initialization signals transmitted by the diagnostic apparatus correspond with the ISO standards. More specifically, the diagnostic apparatus 20 transmits an initialization signal to the data bus 14 after waiting for two msec of idle time. The diagnostic apparatus 20 interrupts the transmission of the initialization signal for 300 msec of bus idle time when it detects a collision between the initialization signal and another signal (a state in which differing signals coexist in the data bus 14) through a feedback signal (not shown).

The structure of the first ECU 11 will now be described with reference to Fig. 2. The first ECU 11 includes a central processing unit (CPU) 31, a read only memory (ROM) 30, a random access memory (RAM) 32, a backup RAM 33, and an input-output (I/O) interface 35. A two-way bus 34 connects the CPU 31, the ROM 30, the RAM 32, the backup RAM 33, and the I/O interface 35 to one another.

The data bus 14, sensors 36, which detect the operating state of the vehicle, and the external device 37, such as an injector or an ignitor, are connected to the I/O interface 35. If analog signals are transmitted from the sensors 36, the signals are converted into digital signals by an analog to digital (A/D) converter (not shown) before being input to the interface 35.

The ROM 30 stores various types of data such as programs that are used to control the communication in the data bus and programs that are used to determine fuel injection timing and ignition timing in accordance with the operating state of the vehicle. The CPU 31 executes computations based on the programs stored in the ROM 30. The external device 37 is controlled based on the results of the computations executed by the CPU 31. The RAM 32 temporarily stores the computation results of the CPU 31 and the data sent from the sensors 36. The backup RAM stores data (e.g., diagnostic data) that remains stored even when the engine (not shown) is stopped.

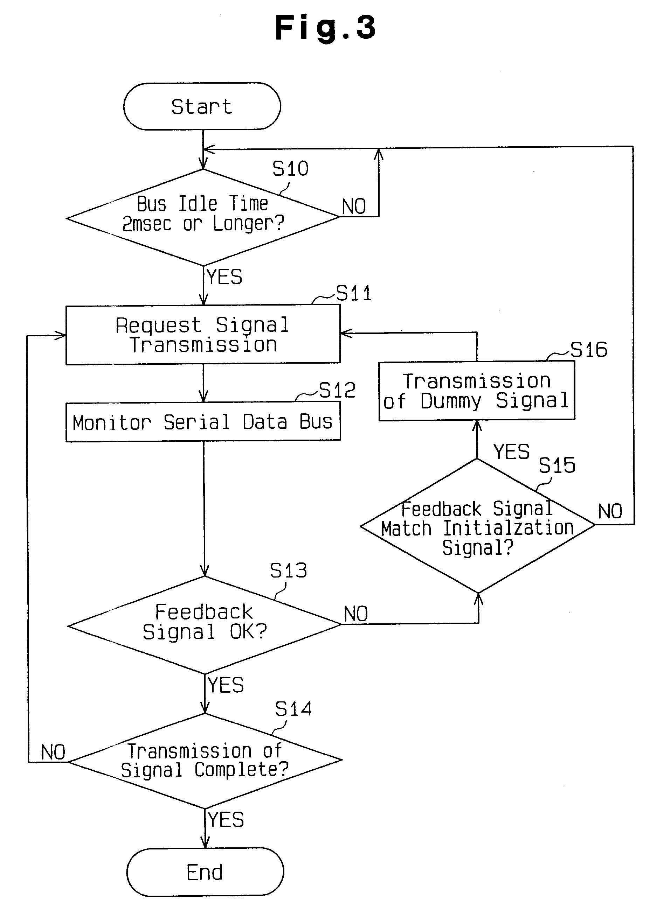

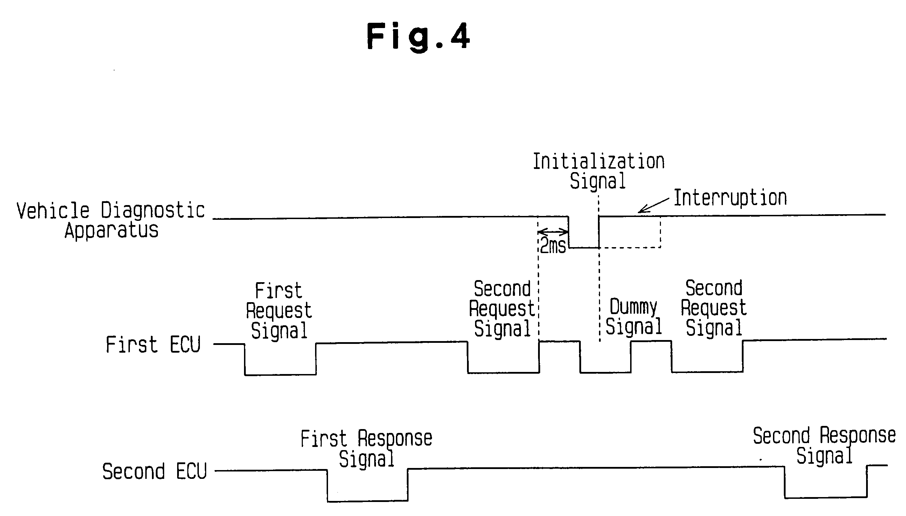

The control of communication carried out by the first ECU 11 will now be described with reference to Figs. 3 and 4. A flowchart showing a communication control program executed by the first ECU 11 is shown in Fig. 3. A time chart showing the communication timing of the diagnostic apparatus 20, the first ECU 11, and the second ECU 12 is shown in Fig. 4. In the flowchart of Fig. 3, "S" refers to step. In Fig. 4, the upper line represents the signal transmitted from the diagnostic apparatus 20 to the data bus 14. The middle line represents the signal transmitted from the first ECU 11 to the data bus 14. The lower line represents the signal transmitted from the second ECU 12 to the data bus 14.

When communication takes place between the first ECU 11 and the second ECU 12, the first ECU 11 functions as the master controller. The first ECU 11 constantly monitors the data bus 14 and waits until 2 msec of bus idle time (the time during which no signal exists in the data bus 14) elapses before transmitting data to the second ECU 12 (S10: NO). When two msec of idle time elapses (S10: YES), the first ECU 11 transmits a first request signal to the second ECU 12 by way of the data bus 14 to commence communication (S11).

The first ECU 11 then monitors the data bus 14 (S12) and judges whether a feedback signal (not shown) sent through the data bus 14 corresponds with the first request signal (S13). With reference to the time chart of Fig. 4, when it is judged that the feedback signal (a signal sent from the second ECU 12) corresponds with the first request signal (S13: YES), the ECU 50 proceeds to S14.

In step S14, the first ECU 11 judges whether transmission of the first request signal has been completed. If the first ECU 11 determines that the transmission of the first request signal has not yet been completed (S14: NO), the first ECU 11 returns to S11 and repeats transmission of the first request signal. When the first ECU 11 determines that the transmission of the first request signal has been completed (S14: YES), the ECU 11 ends communication.

Subsequently, the second ECU 12 transmits a first response signal to the data bus 14 in response to the first request signal.

Afterwards, when the first ECU 11 judges that two msec of bus idle time have elapsed, the ECU 11 transmits a second request signal to the second ECU 12 by way of the data bus (S11). The first ECU 11 then monitors the data bus 14 (S12) and judges whether a feedback signal (not shown) sent through the data bus 14 corresponds with the first request signal (S13).

As shown in the time chart of Fig. 4, in this state, the diagnostic apparatus 20 transmits an initialization signal to the data bus 14 when two msec of bus idle time elapse after the first ECU 11 transmits the second request signal. The transmission of the initialization signal occurs since intervals of 20 to 50msec of bus idle time often appear in the data bus 14. Thus, there are cases in which the diagnostic apparatus 20 transmits an initialization signal to the data bus 14 when two msec of bus idle time elapse after the first ECU 11 transmits the second request signal.

As a result, in S13 of the flowchart shown in Fig. 3, the first ECU 11 will receive the initialization signal and treat it as the feedback signal. In this case, the first ECU 11 judges whether this signal (initialization signal) differs from the second request signal. Since this signal (initialization signal) differs from the second request signal, the ECU 11 proceeds to S15. At S15, the first ECU 11 judges whether the signal corresponds with the initialization signal.

As shown in the flowchart of Fig. 3, when the first ECU 11 determines that the feedback signal corresponds with the initialization signal (S15: YES), the ECU 11 proceeds to S16. In S16, the first ECU 11 transmits a dummy signal, or interrupting signal, to the data bus 14 to interrupt the transmission of the initialization signal. If the signal does not correspond with the initialization signal (S15: NO), the ECU 11 determines that the signal was sent from another ECU and returns to S10 to wait until two msec of bus idle time elapse.

Any kind of signal may be used as the dummy signal as long as it differs from the signals used for data communication by the diagnostic apparatus 20, the first ECU 11, the second ECU 12, and other devices. This is possible since the diagnostic apparatus 20, the functions of which conform with the ISO standards, stops the transmission of the initialization signal and waits for 300msec of bus idle time when it detects other signals in the data bus 14 during the transmission.

Accordingly, the diagnostic apparatus 20 stops the transmission of the initialization signal and waits for 300msec of bus idle time when detecting a dummy signal that differs from the initialization signal. The possibility of the interval of the bus idle time being long (e.g., 300msec) is extremely small in comparison with the possibility of the interval being two msec.

As a result, the first ECU 11 remains functioning as the master controller and stays in control of the communication that takes place through the data bus 14 regardless of the initialization signal from the diagnostic apparatus 20.

After receiving the dummy signal, the first ECU 11 re-transmits the second request signal to the data bus 14 in S11. The first ECU 11 then monitors the data bus 14 (S12) and judges whether the feedback signal sent through the data bus 14 corresponds with the second request signal (S13). Since the feedback signal will correspond with the second request signal, the ECU 11 will determine that the signal was transmitted from the second ECU 12 and will proceed to S14. After completing the transmission of the second request signal (S14: YES), the ECU 11 ends communication.

The interruption in the transmission of the initialization signal from the diagnostic apparatus 20 prevents the data bus 14 and the ECUs 11, 12, 13 from being initialized. Accordingly, this enables the second ECU 12 to receive the second request signal from the first ECU 11 and transmit a second response signal to the data bus 14.

Accordingly, the communication between the first ECU 11 and the second ECU 12 is not interrupted by initialization signals that are transmitted from the diagnostic apparatus 20. Hence, communication between ECUs is carried out smoothly and the intended control is readily achieved.

When a plurality of apparatuses are connected to each other through a network, it is generally necessary to designate the apparatus that is to control communication in the network.

In the prior art, if communication is carried out between two ECUs, one of the ECUs functions as the master controller. When an initialization signal is sent from a diagnostic apparatus, the diagnostic apparatus functions as the mater apparatus. Since priority is given to the diagnostic apparatus functioning as the master controller, communication between the two ECUs is interrupted.

However, in the present invention, the first ECU 11, which functions as the master controller, transmits a dummy signal to stop the transmission of an initialization signal from the diagnostic apparatus 20. This prevents the diagnostic apparatus 20 from functioning as the master controller and allows the first ECU 11 to remain functioning as the master controller. Accordingly, the first ECU 11 remains in control of communications carried out through the network regardless of the transmission of an initialization signal from the diagnostic apparatus 20. Thus, the communication between the first ECU 11 and the second ECU 12 remains uninterrupted.

The merits of the present invention become greatly appreciated as the scale of the network becomes larger.

Although only one embodiment of the present invention has been described herein, it should be apparent to those skilled in the art that the present invention may be embodied in many other specific forms without departing from the spirit or scope of the invention. More specifically, the present invention may be modified as described below.
(1) In addition to the first ECU 11, the second ECU 12 may also function as the master controller. Furthermore, it is required that at least one ECU function as the master controller. However, more than one ECU may function as the master controller.
(2) In the above embodiment, the first ECU 11 controls both the external device 37 (injectors, etc.) and communication, which is carried out through the data bus 14. However, a single-purpose ECU for exclusively controlling communication may be provided in lieu of the multi-purpose ECU. This structure enables specification changes in communication standards to be immediately adopted.

Therefore, the present examples and embodiments are to be considered as illustrative and not restrictive and the invention is not to be limited to the details given herein, but may be modified within the scope of the appended claims.

## Claims

1. A communication control apparatus for controlling communication between a plurality of electronic control units (11, 12, 13) that are provided in a vehicle and a diagnostic apparatus (20), which diagnoses each electronic control unit (11, 12, 13), wherein each of said control units (11, 12, 13) stores diagnostic data used for diagnosis and is connected to the other control units (11, 12, 13) so as to construct a communication network, wherein said diagnostic apparatus (20) is connected to the network to communicate with and read out the diagnostic data stored in each of said control units (11, 12, 13), the communication with the control units (11, 12, 13) being commenced by transmission of an initialization signal to the network from the diagnostic apparatus (20), said communication control apparatus **characterized by that** said plurality of electronic control units (11, 12, 13) includes at least one first control unit (11), and said first control unit (11) comprises:
a determining means for determining whether the initialization signal has been transmitted from said diagnostic apparatus (20) when communication is taking place between said first control unit (11) and other control units (12, 13); and
a transmitting means for transmitting an interrupting signal to the network to stop the transmission of the initialization signal when the determining means determines that the initialization signal has been transmitted.

2. The communication control apparatus according to claim 1 **characterized by that** the communication between each of said control units (11, 12, 13) and the communication between said diagnostic apparatus (20) and the control units (11, 12, 13) are carried out such that the initialization signal is sent after at least two milliseconds of idle time and such that the first control unit (11) waits for at least two milliseconds of idle time before transmitting signals.

3. The communication control apparatus according to claim 2 **characterized by that** the diagnostic apparatus (20) stops the transmission of the initialization signal when it detects a signal in the network that differs from the initialization signal.

4. The communication control apparatus according to claim 3 **characterized by that** said diagnostic apparatus (20) retransmits the initialization signal when confirming that a predetermined length of time in which a signal does not exist in the network has elapsed after stopping the transmission of the initialization signal.

5. The communication control apparatus according to claims 3 or 4 **characterized by that** said interrupting signal includes signals differing from communicating signals that are used by said diagnostic apparatus (20) and said control units (11, 12, 13).

6. The communication control apparatus according to any one of the preceding claims **characterized by that** said determining means determines whether a signal received from the network after transmission of a request signal from the first control unit (11) to another designated control unit (12, 13) corresponds with a feedback signal that is to be transmitted from the designated control unit (12, 13), and said determining means further determines whether the received signal corresponds with the initialization signal transmitted from the diagnostic apparatus (20) when the signal received from the network does not correspond with the feedback signal.

7. The communication control apparatus according to any one of the preceding claims **characterized by that** said first control unit (11) functions as a master controller for controlling communication that is carried out through the network between the control units (11, 12, 13).

8. The communication control apparatus according to claim 7 **characterized by that** said diagnostic apparatus (20) takes the place of the first control unit (11) to function as the master controller when each control unit (11, 12, 13) is initialized by the initialization signal, and said first control unit (11) function as a slave controller controlled by the master controller (20) when initialized.

9. The communication control apparatus according to claim 8 **characterized by that** said first control unit (11) remains functioning as the master controller when communication between the control units (11, 12, 13) takes place by stopping the transmission of the initialization signal from the diagnostic apparatus (20) with the interrupting signal.
